# EUROPEAN PATENT SPECIFICATION

(11) **EP 3 297 267 B1**
(45) Date of publication and mention of the grant of the patent: **13.05.2020**
(21) Application number: 16306197.1
(22) Date of filing: 20.09.2016
(51) Int. Cl.: H04M 3/51, H04Q 3/64

(54) **OPTIMIZATION OF INTERACTIVE VOICE RESPONSE SYSTEMS CAMPAIGNS**
OPTIMIERUNG VON KAMPAGNEN DURCH INTERAKTIVE SPRACHANTWORTSYSTEME
OPTIMISATION DE CAMPAGNES DES SYSTÈME À RÉPONSE VOCALE INTERACTIVE

(43) Date of publication of application: 21.03.2018
(73) Proprietor: Alcatel Lucent, 91620 Nozay (FR)
(72) Inventor: RAKANOGLU, Gurkan, 34776 Istanbul (TR); ABANOZ, Huseyin, 34776 Istanbul (TR); BARUTCU, Murat, 34776 Istanbul (TR)
(74) Representative: Nokia EPO representatives

(56) References cited:
- EP-A2- 0 954 934
- US-B1- 8 811 581

## Description

### FIELD OF THE INVENTION

The present invention pertains generally to the field of interactive voice response systems.

### BACKGROUND

Voice portals are frequently used to answer calls and obtain information from callers. For example, businesses often use voice portals that include interactive voice response (IVR) units to interact with callers and to obtain information from the callers. The IVR systems also are used by businesses to make outgoing calls to customers and/or potential customers. For large businesses, call inbound and outbound call traffic can be quite high, and IVR systems for such high traffic volumes operate to handle calls through a large number of ports or line connections. Management of the call traffic through numerous, but a limited number of, ports, however, raises a variety of issues, particularly where the IVR system handles both in-bound and out-bound calls.

MasslVR is a high capacity IVR system that is triggered by administrator(s) or authorized customers and make voice calls to end users in a defined limited time and get inputs from end users via DTMF (Dual Tone - Multi Frequency). Since MasslVR makes campaigns to setup voice calls within a limited time, calls has to be send immediately without delay to complete the campaing on time. Thus MasslVR has to initiate calls very fast (ex:100 call attempts per second (CAPS)) which implies many active calls at the same time.

However, it is not always possible to initiate calls at maximum speed (ex: 100 CAPS) because of the limited amount of channels towards destinations. Hence, an intelligent algorithm is needed in order not to cause congestion at destination areas.

EP0954934 A2 discloses a method for congestion control in a network. Calls to certain numbers, which can receive multiple calls at the same time, are restricted to a defined upper limit.

### SUMMARY

This summary is provided to introduce concepts related to the present inventive subject matter. This summary is not intended to identify essential features of the claimed subject matter nor is it intended for use in determining or limiting the scope of the claimed subject matter.
In accordance with one embodiment, a method is provided for interactive voice response systems campaigns, the method comprising the following steps in a server:
getting numbers of the campaign to a memory buffer,
selecting an uncalled number from the memory buffer and identifying the area of the selected number,
defining a variable for the identified area as the number of channels used for the different active calls in the identified area, checking if the variable is below a maximum active call limit of the identified area,
if the variable is below the maximum active call limit, initiating a call for the selected number and incrementing by one the variable for the area corresponding to the selected number, if the variable is equal to the maximum active call limit, selecting another uncalled number from the memory buffer,
when a call is terminated for the identified area, decrementing by one the variable (Va) for the identified area.

Advantageously, a high capacity IVR system, which makes calls from machine (application server) to end users, can operate in a much more efficient manner by the means of channel capacity utilization, being able to use the dedicated voice channel capacity efficiently by initiating new calls just after the network releases reserved voice channels and setup calls directly according to the channel capacity limit.

Besides utilization maximization, the high capacity IVR system can use announce files with much more longer duration while the existing solution could only permit maximum duration of 30 seconds.

In an embodiment, different variables are defined respectively for different identified areas.

In an embodiment, the memory buffer is shuffled randomly.

In an embodiment, the area for a number is identified through a number's prefix.

The invention also pertains to a server for interactive voice response systems campaigns, the server comprising:
means for getting numbers of the campaign to a memory buffer,
means for selecting an uncalled number from the memory buffer and identifying the area of the selected number,
means for defining a variable for the identified area as the number of channels used for the different active calls in the identified area,
means for checking if the variable is below a maximum active call limit of the identified area,
means for initiating a call for the selected number and incrementing by one the variable for the area corresponding to the selected number, if the variable is below the maximum active call limit,
means for selecting another uncalled number from the memory buffer, if the variable is equal to the maximum active call limit, means for decrementing by one the variable for the identified area when a call is terminated for the identified area.

The invention also pertains to a computer program capable of being implemented within a server, said program comprising instructions which, when the program is executed within said server, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for optimizing IVR campaign; and
- FIG. 2 is an algorithm of a method for optimizing IVR campaign according to one embodiment of the invention.

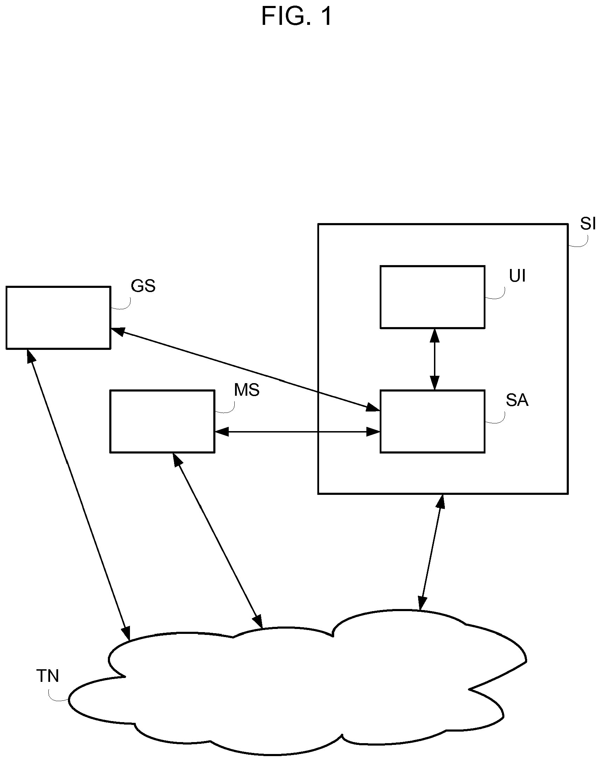

Referring to FIG. 1, a communication system comprises a IVR server SI, a gateway server GS and a media server MS, connected to a telecommunication network TN.

The telecommunication network TN is a wired or wireless network linked to the public switched telephone network (PSTN).

The IVR server SI comprises a user interface UI and a service application SA.

The user interface UI is a portal which is used to create and manage campaigns through internet. In an example, users upload a voice message file, specify a set of subscriber numbers (target audience), determine the schedule for arranging calls and finalize the creation of the campaign. Once a campaign is created, it could be launched immediately or scheduled for another time. With the ability of machine to machine interaction, through the web service capability, it becomes possible to create campaigns using third party applications.

The service application SA is an engine service as software component that realizes campaigns that are created through the user interface. The service application initiates as many calls as possible while respecting the capacity of the resources utilized. Once a campaign is created; it is started by the service application.

A number list is fetched from a database and each call is launched in compliance with existing limits. To fetch numbers from the database, the service application uses a memory buffer. Numbers corresponding to launched calls are removed from this memory buffer and put to active calls buffer.

The IVR server SI is linked to said database that can be deployed into separate servers or same server. In one embodiment, the database is directly managed by the IVR server to avoid latency.

The gateway server GS is a media gateway controller server that is used to perform launching, forwarding, updating and terminating calls requests in the telecommunication network which are initiated by the service application. If the connected telecommunication network employs a messaging protocol other than SIP (Session Initiation Protocol) then required message conversions are performed by the gateway server GS.

For each launched call, messages come to the gateway server GS to be processed and forwarded to the service application SA. Message processing includes required conversions, updating call state data, management of timers related to messaging.

The media server MS implements a Media Resource Function (MRF) able to connect the calls as remote party, to play a designated voice message that is wished to announce to users and to inform the service application about the digits dialed by the subscriber.

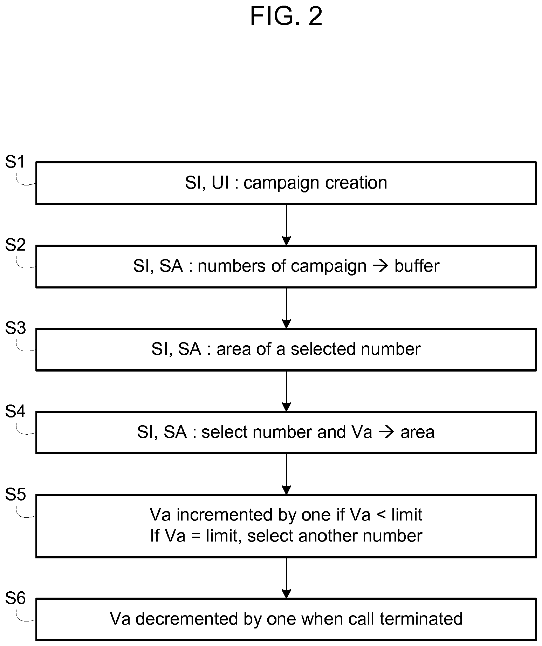

With reference to FIG. 2, a method for optimizing IVR campaign according to one embodiment of the invention comprises steps S1 to S6.

In step S1, a campaign is created and initiated by a user, or the personnel of an enterprise, via the user interface UI of the IVR server SI. In one example, the user can obtain customer records such as phone numbers from different data sources and can select or create a set of questions to be provided by the IVR server.

The service application SA starts the campaign at a planned date defined during the creation of the campaign.

In step S2, the service application SA gets the numbers of the campaign to a memory buffer. To that end, the service application SA may query a database to obtain a list of numbers that are expected to be called. In one embodiment, the memory buffer is shuffled randomly.

In step S3, the service application SA selects an uncalled number from the memory buffer and identifies the area of the number.

In step S4, the service application SA defines a variable Va for the area as the number of channels used for the different active calls in the identified area. A variable is defined for each identified area, has an initial value of "0" and may be named "ActiveCallNumber". The area for a number can be identified through a number's prefix. Thus each area can be associated with a different prefix.

The variable is incremented by one if the IVR server initiates a call for the corresponding area and is decremented by one if the IVR server terminates a call for the corresponding area.

The launch of a call contains several steps described hereinafter. First a subscriber number is called and a SIP invite request is sent from the IVR server to the gateway server GS. The gateway server converts the message to format of the underlying telecommunication network if required and initialize a call in telecommunication network. When the subscriber responds to the call, a first leg of the IVR call is said to be established. Second; the media server MS is called and a SIP invite request is sent to the media server MS. When the media server MS server accepts the call, second leg of the IVR call is said to be established.

Then the session information from the media server MS call needs to be transferred to subscriber call. Thus a second SIP invite is sent to the gateway server GS that re-transmits session information to subscriber call.

Then an IVR call is launched and a voice message transmission phase starts. In order to start voice message transmission, a SIP INFO message is sent to the media server MS. When the SIP INFO message containing play request arrives, the media server MS server starts voice message transmission and waits for user inputs. After the end of the voice message, digits dialed by the subscriber sent from the media server MS to the service application SA by a second SIP INFO message.

When the IVR call is terminated, a status of the disconnected call is sent to the service application SA, the status being sent via another SIP INFO message containing the area of the called number. By this way, the IVR server is able to initiate another call for the same area. This leads maximization of the channel resource utilization since the IVR server is capable of initiating a new call just after the telecommunication network releases a reserved voice channel.

In step S5, the service application SA checks if the identified area has reached its maximum active call limit, in other words if the variable Va or the number of channels used for the different active calls in the identified area is below the channel capacity of the identified area.

If the maximum active call limit is not reached, the service application SA initiates the call for the selected number and increments by one the variable Va for the area corresponding to the selected number.

If the maximum active call limit is reached, the service application SA selects another uncalled number from the memory buffer and the method is repeated from step 3.

In step S6, when a call is terminated, the service application SA identifies the area corresponding to the call and decrements by one the variable Va for the identified area.

Then the service application SA checks if there exists any other uncalled number in the memory buffer. If there exists at least one, the method is repeated from step 3 and if not, the campaign is over.

The invention described here relates to a method and an apparatus for optimizing IVR campaign. According to one implementation of the invention, the steps of the invention are determined by the instructions of a computer program incorporated into the server. The program comprises program instructions which, when said program is loaded and executed within the server, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for interactive voice response systems campaigns, the method comprising the following steps in a server (SI):
getting (S2) numbers of the campaign to a memory buffer,
selecting (S3) an uncalled number from the memory buffer and identifying the area of the selected number,
defining (S4) a variable (Va) for the identified area as the number of channels used for the different active calls in the identified area,
checking (S5) if the variable (Va) is below a maximum active call limit of the identified area,
if the variable (Va) is below the maximum active call limit, initiating (S5) a call for the selected number and incrementing by one the variable (Va) for the area corresponding to the selected number,
if the variable (Va) is equal to the maximum active call limit, selecting (S5) another uncalled number from the memory buffer,
when a call is terminated for the identified area, decrementing (S6) by one the variable (Va) for the identified area.

2. A method according to claim 1, wherein different variables are defined respectively for different identified areas.

3. A method according to any of the claims 1 to 2, wherein the area for a number is identified through a number's prefix.

4. A server (SI) for interactive voice response systems campaigns, the server (SI) comprising:
means (SA) for getting numbers of the campaign to a memory buffer,
means (SA) for selecting an uncalled number from the memory buffer and identifying the area of the selected number,
means (SA) for defining a variable (Va) for the identified area as the number of channels used for the different active calls in the identified area,
means (SA) for checking if the variable (Va) is below a maximum active call limit of the identified area,
means (SA) for initiating a call for the selected number and incrementing by one the variable (Va) for the area corresponding to the selected number, if the variable (Va) is below the maximum active call limit,
means (SA) for selecting (S5) another uncalled number from the memory buffer, if the variable (Va) is equal to the maximum active call limit,
means (SA) for decrementing by one the variable (Va) for the identified area when a call is terminated for the identified area.

5. A non-transitory computer readable storage medium storing instructions that, when executed by a server, cause the server to perform a method for interactive voice response systems campaigns according to any of claims 1 to 3.

## Patentansprüche

1. Verfahren für Kampagnen durch interaktive Sprachantwortsysteme, wobei das Verfahren die folgenden Schritte in einem Server (SI) umfasst:
Einlesen (S2) von Nummern der Kampagne in einen Speicherpuffer,
Auswählen (S3) einer nicht angerufenen Nummer aus dem Speicherpuffer und Identifizieren des Ortsbereichs der ausgewählten Nummer,
Definieren (S4) einer Variablen (Va) für den identifizierten Ortsbereich als die Anzahl der Kanäle, die für die verschiedenen aktiven Anrufe in dem identifizierten Ortsbereich verwendet werden,
Prüfen (S5), ob die Variable (Va) unter einer maximalen aktiven Anrufgrenze des identifizierten Ortsbereichs liegt,
wenn die Variable (Va) unter der maximalen aktiven Anrufgrenze liegt, Einleiten (S5) eines Anrufs für die ausgewählte Nummer und Erhöhen der Variablen (Va) für den Ortsbereich, der der ausgewählten Nummer entspricht, um eins,
wenn die Variable (Va) gleich der maximalen aktiven Anrufgrenze ist, Auswählen (S5) einer anderen nicht angerufenen Nummer aus dem Speicherpuffer,
wenn ein Anruf für den identifizierten Bereich beendet wird, Verringern (S6) der Variablen (Va) für den identifizierten Ortsbereich um eins.

2. Verfahren nach Anspruch 1, wobei für verschiedene identifizierte Ortsbereiche jeweils unterschiedliche Variablen definiert werden.

3. Verfahren nach einem der Ansprüche 1 bis 2, wobei der Ortsbereich für eine Nummer durch die Vorwahlnummer einer Nummer identifiziert wird.

4. Server (SI) für Kampagnen durch interaktive Sprachantwortsysteme, wobei der Server (SI) umfasst: Mittel (SA) zum Einlesen von Nummern der Kampagne in einen Speicherpuffer,
Mittel (SA) zum Auswählen einer nicht angerufenen Nummer aus dem Speicherpuffer und Identifizieren des Ortsbereichs der ausgewählten Nummer,
Mittel (SA) zum Definieren einer Variablen (Va) für den identifizierten Ortsbereich als die Anzahl der Kanäle, die für die verschiedenen aktiven Anrufe in dem identifizierten Ortsbereich verwendet werden,
Mittel zum Prüfen (SA), ob die Variable (Va) unter einer maximalen aktiven Anrufgrenze des identifizierten Ortsbereichs liegt,
Mittel (SA) zum Einleiten eines Anrufs für die ausgewählte Nummer und zum Erhöhen der Variablen (Va) für den Ortsbereich, der der ausgewählten Nummer entspricht, um eins, wenn die Variable (Va) unter der maximalen aktiven Anrufgrenze liegt,
Mittel (SA) zum Auswählen (S5) einer anderen nicht angerufenen Nummer aus dem Speicherpuffer, wenn die Variable (Va) gleich der maximalen aktiven Anrufgrenze ist,
Mittel (SA) zum Verringern der Variablen (Va) für den identifizierten Ortsbereich um eins, wenn ein Anruf für den identifizierten Ortsbereich beendet wird.

5. Nicht flüchtiges, computerlesbares Speichermedium, das Anweisungen speichert, die beim Ausführen durch einen Server den Server veranlassen, ein Verfahren für Kampagnen durch interaktive Sprachantwortsysteme nach einem der Ansprüche 1 bis 3 durchzuführen.

## Revendications

1. Procédé pour des campagnes de systèmes interactifs de réponse vocale, le procédé comprenant les étapes suivantes dans un serveur (SI) :
le rangement (S2) de numéros de la campagne dans un tampon mémoire,
la sélection (S3) d'un numéro non appelé dans le tampon mémoire et l'identification de la zone du numéro sélectionné,
la définition (S4) d'une variable (Va) pour la zone identifiée comme le nombre de voies utilisées pour les différents appels actifs dans la zone identifiée,
la vérification (S5) si la variable (Va) est en deçà d'une limite maximale d'appels actifs de la zone identifiée,
si la variable (Va) est en deçà de la limite maximale d'appels actifs, le lancement (S5) d'un appel pour le numéro sélectionné et l'incrémentation d'une unité de la variable (Va) pour la zone correspondant au numéro sélectionné,
si la variable (Va) est égale à la limite maximale d'appels actifs, la sélection (S5) d'un autre numéro non appelé dans le tampon mémoire,
lorsqu'il est mis fin à un appel pour la zone identifiée, la décrémentation (S6) d'une unité de la variable (Va) pour la zone identifiée.

2. Procédé selon la revendication 1, dans lequel différentes variables sont respectivement définies pour différentes zones identifiées.

3. Procédé selon l'une quelconque des revendications 1 à 2, dans lequel la zone pour un numéro est identifiée au moyen d'un préfixe du numéro.

4. Serveur (SI) pour des campagnes de systèmes interactifs de réponse vocale, le serveur (SI) comprenant :
des moyens (SA) de rangement de numéros de la campagne dans un tampon mémoire,
des moyens (SA) de sélection d'un numéro non appelé dans le tampon mémoire et d'identification de la zone du numéro sélectionné,
des moyens (SA) de définition d'une variable (Va) pour la zone identifiée comme le nombre de voies utilisées pour les différents appels actifs dans la zone identifiée,
des moyens (SA) de vérification si la variable (Va) est en deçà d'une limite maximale d'appels actifs de la zone identifiée,
des moyens (SA) de lancement d'un appel pour le numéro sélectionné et d'incrémentation d'une unité de la variable (Va) pour la zone correspondant au numéro sélectionné, si la variable (Va) est en deçà de la limite maximale d'appels actifs,
des moyens (SA) de sélection (S5) d'un autre numéro non appelé dans le tampon mémoire, si la variable (Va) est égale à la limite maximale d'appels actifs,
des moyens (SA) de décrémentation d'une unité de la variable (Va) pour la zone identifiée lorsqu'il est mis fin à un appel pour la zone identifiée.

5. Support d'enregistrement non transitoire lisible par ordinateur dans lequel sont enregistrées des instructions qui, lorsqu'elles sont exécutées par un serveur, amènent le serveur à réaliser un procédé pour des campagnes de systèmes interactifs de réponse vocale selon l'une quelconque des revendications 1 à 3.
